(19) Europäisches Patentamt / European Patent Office / Office européen des brevets

(11) **EP 1 378 917 B1**

(12) **FASCICULE DE BREVET EUROPEEN**

(45) Date de publication et mention
de la délivrance du brevet:
**15.08.2012 Bulletin 2012/33**

(51) Int Cl.:
***G21C 19/07*** *(2006.01)*     ***G21F 5/012*** *(2006.01)*

(21) Numéro de dépôt: **03101702.3**

(22) Date de dépôt: **11.06.2003**

(54) **Dispositif de rangement pour le stockage et/ou le transport de matières radioactives**

Abstellvorrichtung zur Lagerung bzw. zum Transport von radioaktiven Stoffen

Rack arrangement for storing and/or transporting radioactive substances

(84) Etats contractants désignés:
**AT BE BG CH CY CZ DE DK EE ES FI FR GB GR HU IE IT LI LU MC NL PT RO SE SI SK TR**

(30) Priorité: **13.06.2002 FR 0207261**

(43) Date de publication de la demande:
**07.01.2004 Bulletin 2004/02**

(73) Titulaire: **TN International**
**78182 Montigny Le Bretonneux (FR)**

(72) Inventeurs:
• **Hermouet, Yann**
**78280 Guyancourt (FR)**
• **Biguet, Alexandre**
**93360 Neuilly Plaisance (FR)**

(74) Mandataire: **Poulin, Gérard et al**
**BREVALEX**
**95, rue d'Amsterdam**
**75378 Paris Cedex 8 (FR)**

(56) Documents cités:
**EP-A- 0 042 882      EP-A- 1 246 204**
**WO-A-00/72325      GB-A- 117 186**
**GB-A- 2 289 007      JP-A- 2001 166 089**
**US-A- 3 641 645**

## Description

## DOMAINE TECHNIQUE

La présente invention se rapporte à un dispositif de rangement pour le stockage et/ou le transport de matières radioactives telles que des assemblages de combustible nucléaire, ces derniers ayant été précédemment irradiés dans un réacteur nucléaire.

## ETAT DE LA TECHNIQUE ANTERIEURE

De tels dispositifs de rangement, également appelés « paniers » ou « râteliers » de rangement, présentent une pluralité de logements à l'intérieur desquels peuvent être placés des assemblages de combustible nucléaire irradiés, en vue d'être stockés et/ou transportés.

Dans l'industrie nucléaire, les assemblages de combustible constituent la source d'énergie des centrales nucléaires, et sont par conséquent amenés à être stockés et/ou déplacés durant une période de temps s'étendant entre la fin de leur utilisation en tant que source d'énergie de la centrale, et leur entreposage dans des sites de retraitement.

En effet, les dispositifs de rangement trouvent une application pour le stockage d'assemblages de combustible irradiés dans les centrales nucléaires ou dans des sites de retraitement, ou encore pour le transport de ces assemblages de combustible irradiés, par exemple entre les centrales nucléaires et les sites de retraitement.

Les dispositifs de rangement de ce type doivent remplir diverses fonctions. Ces fonctions comprennent notamment la résistance mécanique et le calage des matières radioactives, ainsi que l'aptitude à être manutentionné.

De plus, selon la nature des matières radioactives, le dispositif de rangement doit assurer différentes fonctions liées à la sûreté nucléaire du transport ou du stockage. Parmi ces fonctions, on citera principalement la nécessité d'évacuer le flux de chaleur produit par les matières contenues dans le dispositif et le contrôle de la criticité nucléaire, lorsque ces matières sont des matières fissiles susceptibles de provoquer une réaction en chaîne.

La fonction de résistance mécanique a pour but de maintenir la géométrie du dispositif lors des opérations de manutention, sous l'effet des accélérations rencontrées au cours du transport, mais aussi en cas de choc ou de chute accidentelle, pour conserver le contrôle de la criticité nucléaire dans de telles circonstances. Notons par ailleurs que ces configurations font l'objet d'épreuves réglementaires.

Ainsi, parmi les tests à subir pour satisfaire ces exigences réglementaires et obtenir l'agrément requis pour effectuer le transport/stockage d'assemblages de combustible nucléaire, on note différentes épreuves telles que celles dites « de chute libre », dont notamment la chute de 9 mètres.

Dans ce domaine technique, plusieurs réalisations ont déjà été proposées (cf. JP 2001-166089, EP 1 246 204, EP 0042882, WO 0072325, mais aussi GB 117 186 et US 3611645).

Les dispositifs de rangement d'assemblages de combustible nucléaire disposent habituellement d'une pluralité de logements adjacents, chacun présentant une section transversale carrée ou hexagonale, afin de permettre l'introduction et le maintien d'un assemblage de combustible de forme complémentaire à l'intérieur de ce logement. Pour réaliser les parois latérales de ces logements, on utilise généralement des éléments de paroi réalisés dans un matériau allié avec le bore, ce dernier étant retenu en raison de sa capacité à absorber les neutrons, et à assurer par conséquent le contrôle de la sûreté nucléaire.

Dans un premier type de réalisation de l'art antérieur, on connaît des dispositifs comportant des parois latérales de logement réalisées à l'aide de bandes d'acier inoxydable allié avec le bore. Cette solution permet à ce type de dispositif de présenter une pluralité de caractéristiques techniques avantageuses. En effet, le poison neutronique assurant la sous-criticité du dispositif et interdisant les interactions entre les divers assemblages de combustible est constitué par le bore, comme cela a été rappelé ci-dessus. De plus, l'utilisation de l'acier inoxydable pour réaliser les parois latérales des logements procure un blindage gamma complémentaire, ainsi qu'une très forte rigidité au dispositif de rangement.

Il est précisé que la caractéristique de forte rigidité du dispositif est d'autant plus bénéfique qu'elle permet au dispositif de rangement de satisfaire sans difficultés les exigences réglementaires de sûreté pour le transport/stockage d'assemblages de combustible nucléaire précitées.

Comme cela a été mentionné ci-dessus, en prévoyant une épaisseur de paroi latérale suffisante, les bandes en acier inoxydable constituant cette paroi permettent de passer avec succès l'ensemble de ces épreuves.

Cependant, la mise en oeuvre d'un tel matériau entraîne des inconvénients non-négligeables.

En effet, bien que l'utilisation de l'acier augmente considérablement la rigidité du dispositif de rangement, elle entraîne par ailleurs un alourdissement de celui-ci qui n'est pas toujours compatible avec l'exigence d'une masse maximum à respecter, cette limitation de masse étant imposée par les contraintes d'exploitation.

De plus, lorsque des assemblages de combustible nucléaire reposent dans leurs logements respectifs du dispositif de rangement, il est impératif que les parois latérales soient en mesure d'évacuer la chaleur résiduelle émanant des assemblages entreposés. Or cette fonction de transfert thermique n'est que très faiblement assurée par l'acier inoxydable, cet inconvénient majeur pouvant provoquer des surchauffes dangereuses au sein du dispositif de rangement.

Pour faire face à ce problème, il a été proposé

3 EP 1 378 917 B1 4

de remplacer le matériau mentionné ci-dessus, à savoir un alliage d'acier inoxydable et de bore, par un alliage d'aluminium et de bore, de manière à disposer d'un matériau capable d'une part de mieux évacuer la chaleur résiduelle, et d'autre part d'assurer un contrôle équivalent de la criticité nucléaire.

Une première réalisation mettant en oeuvre ce matériau est apparue dans l'art antérieur, cette réalisation consistant en un empilement de structures moulées en alliage d'aluminium et de bore, et présentant des ouvertures pour définir les logements. Néanmoins, il s'est rapidement avéré qu'une telle solution ne permettait pas d'apporter au dispositif de rangement une rigidité suffisante pour pouvoir prétendre satisfaire les exigences réglementaires de sûreté pour le transport/stockage d'assemblages de combustible nucléaire, principalement en raison des faibles propriétés de tenue mécanique de l'aluminium moulé.

De plus, outre le problème afférant à la rigidité du dispositif, un autre inconvénient provenant de la mise en oeuvre d'un tel matériau réside dans la difficulté d'obtenir une répartition homogène du bore dans l'aluminium lors du moulage, ceci conduisant à des situations dans lesquelles l'état de sous-criticité du dispositif ne serait pas conservé.

Par ailleurs, d'autres réalisations de l'art antérieur ont proposé de raccorder entre eux des éléments de paroi en alliage d'aluminium et de bore, fabriqués par extrusion afin d'engendrer une rigidité accrue par rapport aux éléments de paroi moulés en aluminium.

Ainsi, on connaît de l'art antérieur des dispositifs dont les éléments de paroi formant la paroi latérale des logements sont reliés entre eux par des opérations de soudage. Cependant, la technique de soudage requise pour assembler ces éléments de paroi est celle du soudage par faisceau d'électrons, cette technique onéreuse conduisant inévitablement à des surcoûts de fabrication, incompatibles avec la nécessité de concevoir des dispositifs rentables. En outre, le soudage entre deux éléments de paroi en alliage d'aluminium et de bore peut provoquer une légère déformation de ceux-ci, ne permettant alors plus aux logements de recevoir et/ou de maintenir les assemblages de combustible nucléaire.

Une autre solution envisagée dans l'art antérieur est relative à l'emploi de liaisons du type emboîtement vissé entre deux éléments de paroi d'un même logement, cette solution n'étant que très peu performante en raison de la difficulté rencontrée à établir une liaison rigide entre une vis et un orifice fileté dans de l'aluminium. Par ailleurs, il est noté que l'augmentation du nombre de pièces constituant le dispositif de rangement provoque l'apparition d'inconvénients majeurs, notamment en termes de rapidité d'assemblage et de coût global du dispositif.

Enfin, une dernière solution proposée pour assembler deux éléments de paroi perpendiculaires d'une paroi latérale d'un même logement est décrite dans le document WO-A-00/72325. Cette technique consiste à munir le chant longitudinal du premier élément de paroi d'une pluralité de portions d'engagement, et de munir une face du second élément de paroi d'une pluralité de portions d'engagement complémentaires, ces dernières étant destinées à coopérer avec les portions d'engagement situées sur le chant du premier élément. De cette manière, par mise en regard des portions d'engagement et des portions d'engagement complémentaires suivie d'une insertion en force de celles-ci les unes dans les autres, il est possible de procéder à l'assemblage de ces deux éléments.

Cependant, le type de liaison obtenu à l'aide des portions d'engagement et des portions d'engagement complémentaires engendre des inconvénients extrêmement néfastes pour un dispositif de rangement comprenant ce type de liaison. En effet, certaines de ces portions font saillie pour être introduites en force dans d'autres qui sont évidées.

Un des problèmes rencontrés lors de la mise en oeuvre de ces liaisons est l'absence de possibilité de démontage puis de remontage des éléments de paroi constituant la paroi latérale des logements. En effet, lorsque les deux éléments de parois sont assemblés, pour effectuer un démontage de ces derniers, les portions d'engagement et/ou les portions d'engagement complémentaires prévues sur les deux éléments doivent impérativement être endommagées pour que leur assemblage soit rompu, ce qui interdit inévitablement la réutilisation de ces éléments. Il est également précisé qu'en plus de l'impossibilité de réutilisation des éléments de paroi, ce type de liaison obtenu par montage en force engendre d'importantes difficultés pour réaliser le démontage du dispositif, effectué par exemple lors d'opérations relatives à la maintenance du dispositif.

Un autre inconvénient afférent à ce type de liaison proposé est le faible maintien qu'elle procure entre les deux éléments de paroi. En d'autres termes, malgré la pluralité de portions coopérantes entre les deux éléments de paroi perpendiculaires du même logement, cette liaison reste constituée de plusieurs attaches ponctuelles reparties sur la surface de contact entre les deux éléments à assembler. Par conséquent, les attaches ponctuelles constituant la liaison ne procurent pas forcément un maintien suffisamment rigide pour permettre au dispositif de rangement de satisfaire les exigences réglementaires de sûreté pour le transport/stockage d'assemblages de combustible nucléaire. Notons que cet inconvénient est encore davantage amplifié lorsque les éléments de paroi sont réalisés dans un matériau ne disposant pas de fortes caractéristiques de rigidité comme un alliage d'aluminium et de bore, ce matériau étant pourtant celui escompté pour assurer la sous-criticité et la fonction de transfert thermique du dispositif.

EXPOSÉ DE L'INVENTION

L'invention a donc pour but de proposer un dispositif de rangement pour le stockage et/ou le transport de matières radioactives telles que des assemblages de combustible nucléaire, le dispositif remédiant au moins partiellement aux inconvénients mentionnés ci-dessus relatifs aux réalisations de l'art antérieur.

Plus précisément, le but de la présente invention est de présenter un dispositif de rangement comprenant une pluralité de logements chacun apte à recevoir au moins un assemblage de combustible nucléaire, et dont au moins une liaison entre deux éléments de paroi de la paroi latérale de chaque logement est réalisée de telle sorte qu'elle soit de conception simple, et qu'elle procure un maintien renforcé entre les deux éléments de parois, notamment par rapport au maintien engendré par les liaisons rencontrées dans les dispositifs de l'art antérieur.

Pour ce faire, l'invention a pour objet un dispositif de rangement pour le stockage et/ou le transport de matières radioactives selon le sujet de la revendication 1.

## BRÈVE DESCRIPTION DES DESSINS

Cette description sera faite au regard des dessins annexés parmi lesquels ;

- la figure 1 représente une vue en perspective partiellement éclatée d'une partie d'un dispositif de rangement selon un mode de réalisation préféré de la présente invention ;
- la figure 2 représente une vue en perspective d'une partie d'un dispositif de rangement selon un autre mode de réalisation préféré de la présente invention ;
- la figure 3a représente une vue en coupe d'un assemblage entre deux éléments de paroi du dispositif de rangement représenté sur la figure 2;
- la figure 3b représente un vue en coupe d'un assemblage entre deux éléments de paroi d'un dispositif de rangement selon un autre mode de réalisation préféré ; et
- la figure 4 représente une vue en coupe selon un plan perpendiculaire à l'axe longitudinal du dispositif de rangement représenté sur la figure 1.

## EXPOSÉ DÉTAILLÉ DE MODES DE RÉALISATION PRÉFÉRÉS

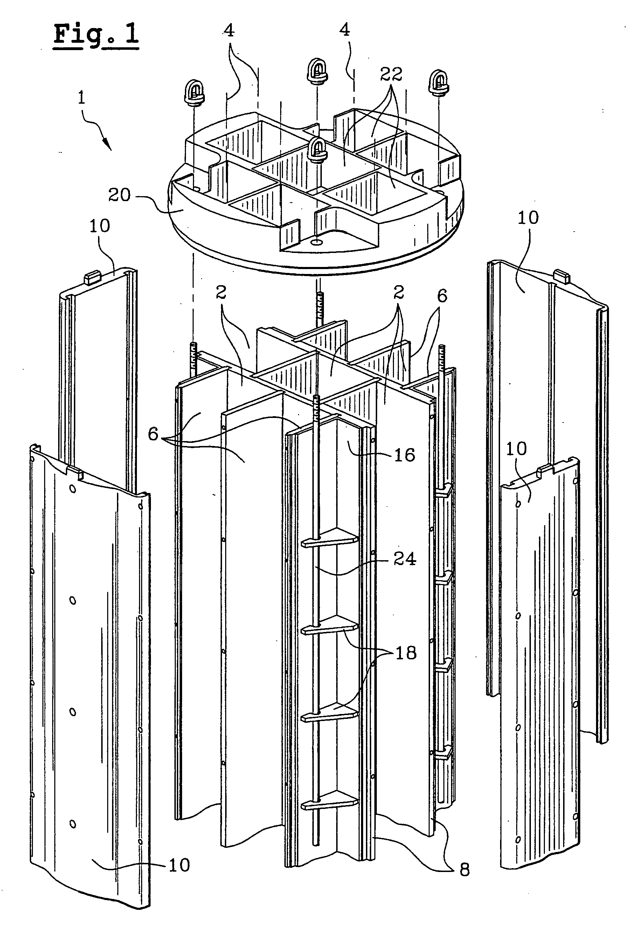

Le figure 1 illustre un dispositif de rangement 1 pour le stockage et/ou le transport de matières radioactives telles que des assemblages de combustible nucléaire (non représentés), selon un mode de réalisation préféré de la présente invention.

Comme on peut le voir sur la figure 1, le dispositif de rangement 1 comprend une pluralité de logements 2 disposés parallèlement, ces derniers s'étendant chacun selon un axe longitudinal 4. Les logements 2 sont chacun apte à recevoir au moins un assemblage de combustible de section carrée, et de préférence un seul, de sorte que l'axe longitudinal 4 du logement 2 soit sensiblement parallèle à l'axe longitudinal de l'assemblage de combustible reposant dans ce logement 2.

Les logements 2 sont prévus de manière à être juxtaposés les uns aux autres, et sont réalisés par l'intermédiaire d'une pluralité d'éléments de paroi 6, 8 et 10, dont certains sont communs à plusieurs logements 2 du dispositif 1. Lorsqu'ils sont assemblés, les éléments de parois 6, 8 et 10 forment la paroi latérale de chacun des logements 2, cette paroi latérale ayant de préférence une section transversale de forme sensiblement carrée, mais pouvant également adopter d'autres formes autorisant le maintien d'un assemblage de combustible de forme différente, telles qu'une forme hexagonale.

Pour permettre aux logements 2 de présenter une section transversale de forme sensiblement carrée, les éléments de paroi 6, 8 et 10 sont assemblés entre eux de façon à être disposés parallèlement et perpendiculairement les uns par rapport aux autres. A ce titre, on note que les éléments de paroi 6, 8 et 10 sont répartis en trois jeux d'éléments distincts, définis respectivement par un premier jeu d'éléments de paroi, un second jeu d'éléments de paroi, ainsi qu'un jeu d'éléments de paroi périphériques.

Toujours en référence à la figure 1, on voit l'assemblage entre les éléments de paroi 6 du premier jeu d'élément de paroi, et les éléments de paroi 8 du second jeu d'éléments de paroi. Les éléments 6 sont disposés parallèlement les uns par rapport aux autres, au même titre que les éléments 8 entre eux. De plus, les éléments de paroi 6 sont assemblés de manière à être sensiblement perpendiculaires aux éléments de paroi 8.

Notons comme cela est visible sur la figure 1 que dans ce mode de réalisation préféré, les éléments de paroi 6 et 8 s'étendent chacun sur toute la longueur du/des logements 2 qu'ils forment, de façon à ce que chacun d'entre eux constitue une face latérale plane de la paroi d'un ou de plusieurs logements 2.

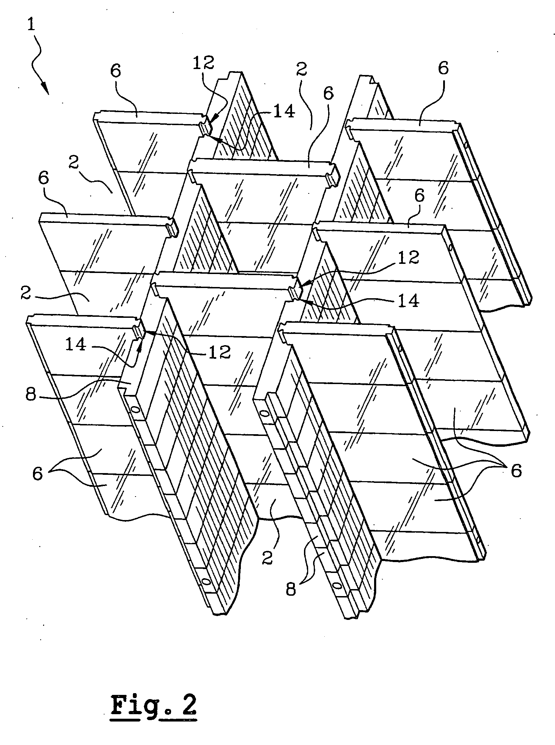

Cependant, il est à préciser que les éléments de paroi 6 et 8 sont préférentiellement réalisés par extrusion dans un alliage d'aluminium et de bore. Ainsi, la hauteur maximale de ces éléments de paroi 6 et 8 est relativement limitée, ce qui peut conduire à réaliser un empilement de ces derniers selon l'axe longitudinal du/des logements qu'ils forment, comme le montre la figure 2 représentant partiellement un autre mode de réalisation préféré du dispositif 1. Notons que la hauteur maximale admissible est d'autant plus importante que l'épaisseur de l'élément de paroi concerné est mince. Par conséquent, comme les éléments de paroi 6 sont moins épais que les éléments de paroi 8 pour des raisons de tenue mécanique, la hauteur maximale admissible des éléments de paroi 6 est donc plus importante que la hauteur maximale admissible des éléments de paroi 8.

De plus, comme représenté sur la figure 2, l'empilement des éléments de paroi 6 et 8 est préférentiellement réalisé de telle sorte que les chants transverses des éléments de paroi 6 ne se trouvent jamais dans le même plan que les chants transverses des éléments de paroi 8. Cet agencement particulier à en effet pour avantage de favoriser la rigidité du dispositif de rangement 1.

Dans les modes de réalisation préférés décrits, le dispositif de rangement 1 comprend sept logements 2, agencés de telle sorte que chacun des deux éléments de paroi 8 ou chacun des deux empilements d'éléments de paroi 8 définisse partiellement la paroi latérale de trois logements 2 à l'aide de l'une de ses faces, ainsi que la paroi latérale de deux logements 2 à l'aide de l'autre de ses faces. De plus, il est précisé que les faces des éléments 8 ou des empilements d'éléments 8, définissant partiellement la paroi latérale de trois logements 2, sont positionnées en regard l'une de l'autre, de manière à ce que les deux éléments 8 ou les deux empilements d'éléments 8 appartiennent à la paroi latérale des trois mêmes logements 2.

Comme on peut le voir sur la figure 2, chacun des éléments de paroi 6 du premier jeu d'éléments de paroi est assemblé sur au moins un des éléments de paroi 8 du second jeu d'éléments de paroi.

Pour chaque logement 2 du dispositif 1, au moins une liaison entre deux éléments de paroi 6 et 8 est telle que l'un est muni d'une portion d'engagement 12, coopérant avec une portion d'engagement complémentaire 14 prévue sur l'autre des éléments 6 et 8.

Préférentiellement, chacune des liaisons entre les éléments 6 et 8 des premier et second jeux d'éléments de paroi sont réalisées de la sorte.

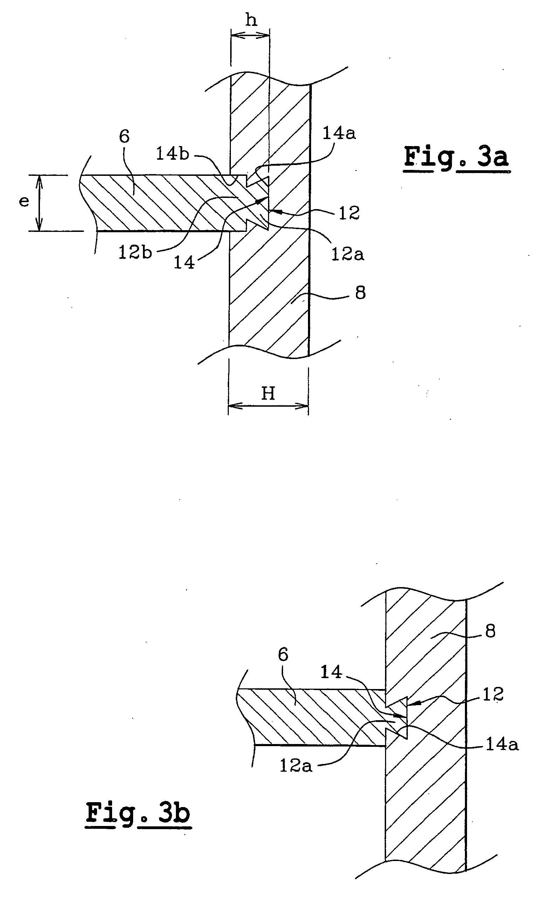

Plus spécifiquement et en référence aux figures 2 et 3a, pour deux éléments quelconques 6 et 8 en contact, les portions d'engagement 12 et d'engagement complémentaire 14 comprennent chacune une partie 12a,14a en forme de queue d'aronde aptes à s'engager l'une dans l'autre, selon une direction sensiblement parallèle à l'axe longitudinal 4 du logement 2 partiellement constitué par les éléments quelconques 6 et 8.

Ainsi, la liaison engendrée par la coopération entre la portion d'engagement 12 et la portion d'engagement complémentaire 14 peut s'étendre sur toute la longueur de contact entre les deux éléments portant ces portions. De cette manière, les parties complémentaires 12a et 14a en forme de queue d'aronde se prolongeant sur une longueur relativement importante, voire sur l'intégralité du contact entre les deux éléments 6 et 8 munis de telle formes, la liaison obtenue entre les deux éléments 6 et 8 ou les deux empilements d'éléments 6 et 8 procure un maintien particulièrement rigide entre ces derniers.

Notons que pour une liaison donnée, la portion d'engagement 12 et la portion d'engagement complémentaire 14 sont sensiblement de même forme, l'une faisant saillie et l'autre étant évidée. Il est en outre préférable de prévoir un jeu faible de l'ordre du dixième de millimètre entre les deux portions 12 et 14, de manière à faciliter le coulissement de l'une dans l'autre, lors du montage ou du démontage des éléments de parois 6 et 8.

De plus, en raison de la direction d'engagement entre les parties en forme de queue d'aronde 12a et 14a, le montage et le démontage des éléments de paroi 6 et 8 des premier et second jeux d'éléments de paroi sont réalisables par simple coulissement des portions d'engagement 12 et des portions d'engagement complémentaires 14, facilitant ainsi la réalisation de ces opérations, sans avoir recours à de quelconques détériorations des éléments 6 et 8. D'autre part, cet agencement particulier permet sans difficulté de réaliser l'empilement des éléments de paroi 6 et des éléments de paroi 8. Il sera par ailleurs avantageux de prévoir les portions d'engagement 12 et d'engagement complémentaire 14 sur toute la longueur de contact entre les différents empilements.

Dans le mode de réalisation préféré décrit et en référence à la figure 3a, la portion d'engagement 12 comprend d'une part la partie 12a en forme de queue d'aronde, et d'autre part une partie 12b sensiblement parallélépipédique et portant la partie 12a. Notons que dans le mode de réalisation préféré décrit, la partie 12b est une portion de l'élément de paroi 6 d'épaisseur identique à l'épaisseur moyenne de cet élément 6. Cependant, sans sortir du cadre de l'invention, il est naturellement envisageable de prévoir toute forme appropriée pour la partie 12b de la portion d'engagement 12, de manière à ce que cette dernière autorise le coulissement des éléments de paroi 6 et 8.

De la même façon, la portion d'engagement complémentaire 14 comprend d'une part la partie 14a en forme de queue d'aronde, et d'autre part une partie 14b de forme sensiblement complémentaire de la forme de la partie 12b, et en contact avec la partie 14a en forme de queue d'aronde. Dans le mode de réalisation représenté sur la figure 3a, la partie 14b de la portion 14 prend donc la forme d'une rainure de largeur sensiblement égale à l'épaisseur moyenne de l'élément de paroi 6, au jeu près.

Par conséquent, la liaison entre les éléments de paroi 6 et 8 est composée d'un emboîtement du type queue d'aronde à l'aide des parties 12a et 14a des portions d'engagement 12 et d'engagement complémentaire 14, ainsi que d'un emboîtement du type tenon/plan à l'aide des parties 12b et 14b, précédant l'emboîtement du type queue d'aronde. Bien entendu et comme rappelé ci-dessus, l'emboîtement tenon/plan est réalisé de manière quelconque, tout en permettant aux parties 12a et 14a en forme de queue d'aronde de coulisser dans une direction sensiblement parallèle aux axes 4 des logements 2.

A titre d'exemple et toujours en référence à la figure 3a, en notant e l'épaisseur de l'élément 6, H l'épaisseur de l'élément 8 et h la longueur de la portion d'engagement 12 pénétrant dans l'élément 8, on peut préférentiellement prévoir que ces paramètres remplissent les relations algébriques suivantes :

$$h = 2e/3 \quad \text{et} \quad H = 4e/3$$

Dans un autre mode de réalisation préféré représenté sur la figure 3b, les portions d'engagement 12 et d'engagement complémentaire 14 sont uniquement et respectivement constituées par les parties 12a et 14a en forme de queue d'aronde.

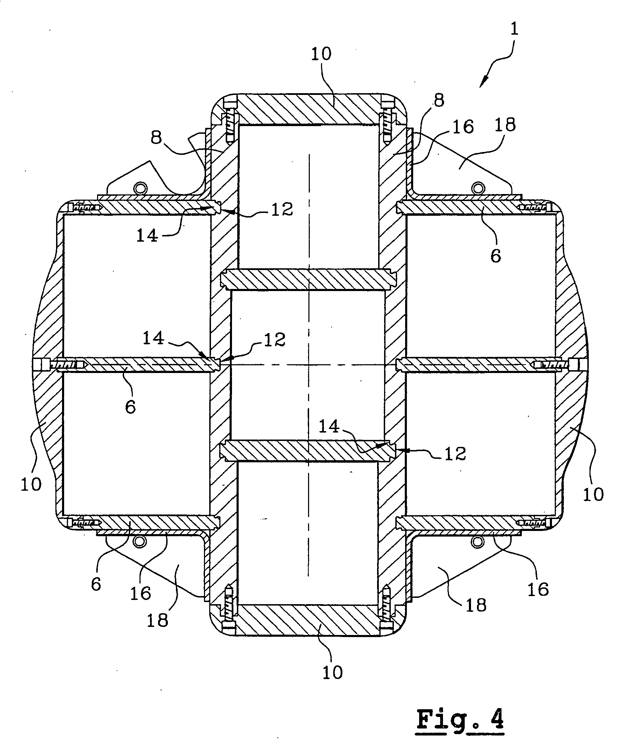

Comme le montre mieux la figure 4, chaque élément de paroi 6 du premier jeu d'éléments de paroi est muni au niveau d'au moins l'un de ses deux chants longitudinaux d'une portion d'engagement 12, telle que l'une de celles qui viennent d'être décrites. Par ailleurs, chaque élément de paroi 8 du second jeu d'éléments de paroi est muni alternativement sur chacune de ses deux faces d'une pluralité de portions d'engagement complémentaires évidées 14 telles que l'une de celles décrites précédemment, ces dernières coopérant chacune avec la portion d'engagement 12 d'un élément de paroi 6. Les portions évidées 14 et faisant saillie 12 sont facilement réalisables par usinage, et peuvent bien entendu se trouver indifféremment sur les éléments 6 du premier jeu d'éléments de paroi, ou sur les éléments 8 du second jeu d'éléments de paroi. Dans l'exemple représenté, elles forment des logements dont la section carrée peut différer en fonction du logement 2 considéré. Bien entendu, on pourrait également prévoir que les logements 2 disposent tous de la même section carrée, sans sortir du cadre de l'invention.

Il est à noter que les éléments de paroi 10 du jeu d'éléments de paroi périphériques du dispositif de rangement 1 sont montés par vissage sur les éléments de paroi 6 et 8, mais qu'ils pourraient naturellement être fixés de la même façon que celle retenue pour les éléments 6 et 8, à savoir par un système comprenant des portions complémentaires en forme de queue d'aronde.

De manière préférée, les éléments de paroi 6 et 8 des premier et second jeux d'éléments de paroi sont réalisés dans un alliage d'aluminium et de bore, afin de permettre l'évacuation de la chaleur résiduelle provenant des assemblages de combustible nucléaire reposant dans les logements 2, ainsi que pour conserver l'état de sous-criticité du dispositif de rangement 1. En revanche, les éléments de paroi 10 du jeu d'éléments de paroi périphériques sont réalisés en acier inoxydable, de manière à renforcer la rigidité du dispositif 1, et procurer un blindage gamma complémentaire.

Toujours dans le but de renforcer la rigidité du dispositif 1, notamment en vue de satisfaire les exigences réglementaires de sûreté pour le transport/stockage d'assemblages de combustible nucléaire, le dispositif 1 peut comporter des renforts latéraux 16 situés à la périphérie du dispositif de rangement 1, visibles sur les figures 1 et 4.

Chaque renfort latéral 16 est de préférence en aluminium, et présente une section en forme de L afin d'être fixé à plat par vissage simultanément sur deux éléments de paroi 6 et 8, disposés perpendiculairement et à la périphérie du dispositif 1.

Les renforts latéraux 16 se prolongent avantageusement sur toute la longueur de la paroi latérale des logements 2, et sont munis d'une pluralité d'équerres 18 espacées les unes des autres, assemblées par soudage sur chacune des deux branches du renfort 16 en forme de L.

Par ailleurs, il est également possible de prévoir que le dispositif 1 comprend une pièce d'extrémité perforée supérieure et une pièce d'extrémité perforée inférieure (seule la pièce d'extrémité supérieure étant représentée sur la figure 1 et désignée par la référence numérique 20), ces pièces d'extrémité 20 étant en acier inoxydable et montées par vissage sur les éléments de paroi 10 du jeu d'éléments de paroi périphériques. Comme cela est visible sur la figure 1, la pièce d'extrémité perforée supérieure 20 dispose d'ouvertures 22 autorisant l'introduction des assemblages de combustible nucléaire, et se prolongeant chacune dans un logement 2 du dispositif 1.

Enfin, on peut aussi noter la présence de tirants 24 (figure 1) couplés à un système élastique (non représenté) autorisant des déplacements et établissant la liaison entre d'une part les éléments 10, et d'autre part les pièces d'extrémité 20 du dispositif 1. Ces liaisons rendues mobiles sont prévues en raison de la différence de matériau entre les éléments de paroi 6 et 8 en aluminium, et les éléments de paroi 10 du jeu d'éléments de paroi périphériques en acier. En effet, le dispositif étant soumis à d'importantes contraintes thermiques, il est courant de rencontrer un phénomène de dilatation thermique des éléments de paroi 6, 8 et 10, ce phénomène étant bien plus conséquent sur les éléments de paroi 6 et 8 en aluminium que sur les éléments de paroi 10 en acier.

Par ailleurs, les liaisons entre les éléments de paroi 6 et 8 des premier et second jeux d'éléments de paroi, réalisées au moyen des portions complémentaires s'engageant selon une direction parallèle aux axes longitudinaux 4 des logements 2, sont tout à fait adaptées pour résister au phénomène de dilatation des éléments 6 et 8. En effet, la direction principale de dilatation thermique des éléments 6 et 8 est parallèle aux axes longitudinaux 4 des logements 2, cette direction étant également celle dans laquelle les portions d'engagement 12 et les portions d'engagement complémentaires 14 sont aptes à coulisser. Ainsi, avec de telles liaisons, il est donc possible d'utiliser des éléments de paroi 6 et 8 de matériaux différents n'ayant pas le même coefficient de dilatation, sans provoquer la rupture de ces liaisons lors d'une variation de la température à l'intérieur du dispositif de rangement 1. Dans un tel cas, les éléments de paroi 6 et 8 seront en mesure de coulisser les uns par rapport aux autres sans engendrer la détérioration de leurs portions d'engagement respectives.

Bien entendu, diverses modifications peuvent être apportées par l'homme du métier aux dispositifs de rangement 1 qui viennent d'être décrits, uniquement à titre d'exemples non limitatifs.

## Revendications

1. Dispositif de rangement (1) adapté pour le stockage et/ou le transport de matières radioactives telles que des assemblages de combustible nucléaire, ledit dispositif (1) comprenant une pluralité de logements (2) chacun adapté à recevoir au moins un assemblage de combustible nucléaire, chaque logement (2) étant réalisé par l'intermédiaire d'une pluralité d'éléments de paroi (6,8,10) qui lorsqu'ils sont assemblés forment la paroi latérale du logement (2), au moins une liaison entre deux éléments de paroi (6,8) du logement (2) étant réalisée au moyen d'une portion d'engagement (12) et d'une portion d'engagement complémentaire (14) respectivement prévues sur l'un et l'autre desdits deux éléments de paroi (6,8) du logement (2), lesdites portion d'engagement (12) et portion d'engagement complémentaire (14) comprenant chacune une partie en forme de queue d'aronde (12a,14a) conçues pour s'engager l'une dans l'autre, selon une direction sensiblement parallèle à un axe longitudinal (4) dudit logement (2), la paroi latérale d'au moins une partie de ladite pluralité de logements (2) étant formée d'éléments de paroi (6) appartenant à un premier jeu d'éléments de paroi, et d'éléments de paroi (8) appartenant à un second jeu d'éléments de paroi, les éléments de paroi (3) du second jeu étant disposés sensiblement perpendiculairement aux éléments de paroi (6) du premier jeu,

   les éléments de paroi (6) du premier jeu comprenant chacun une portion d'engagement (12) faisant saillie au niveau d'au moins un chant longitudinal de cet élément de paroi (6),

   les éléments de paroi (8) du second jeu comprenant chacun au moins une face munie d'au moins une portion d'engagement complémentaire (14) évidée, recevant une portion d'engagement (12) ,

   au moins un élément de paroi (8) du second jeu présentant deux faces opposées sur chacune desquelles étant prévue une pluralité de portions d'engagement complémentaires (14) évidées, espacées les unes des autres ,

   et **caractérisé en ce que** ledit élément de paroi (3) est assemblé, au niveau de chacune de ses deux faces opposées, à une pluralité d'éléments de paroi (6), à l'aide de ses portions d'engagement complémentaires (14), et les éléments de paroi (6) prévus au niveau de l'une des deux faces sont agencés dans des plans distincts de ceux dans lesquels sont agencés les éléments de paroi (6) prévus au niveau de l'autre des deux faces.

2. Dispositif de rangement (1) selon la revendication 1, **caractérisé en ce que** la portion d'engagement (12) et la portion d'engagement complémentaire (14) comprennent également chacune une autre partie (12b,14b) que la partie en forme de queue d'aronde (12a,14a), les autres parties (12b,14b) étant en contact avec les parties (12a,14a) en forme de queue d'aronde.

3. Dispositif de rangement (1) selon revendication 1, **caractérisé en ce que** la portion d'engagement (12) et la portion d'engagement complémentaire (14) sont constituées uniquement et respectivement par les parties (12a,14a) en forme de queue d'aronde.

4. Dispositif de rangement (1) selon l'une quelconque des revendications précédentes, **caractérisé en ce que** pour chaque liaison réalisée à l'aide d'une portion d'engagement (12) et d'une portion d'engagement complémentaire (14), la portion d'engagement (12) et la portion d'engagement complémentaire (14) coopèrent l'une avec l'autre sur toute la longueur de contact entre les éléments de paroi (6,8) munis desdites portions (12,14).

5. Dispositif de rangement (1) selon l'une quelconque des revendications précédentes, **caractérisé en ce que** les éléments de paroi (6,8) du premier et du second jeux d'éléments de paroi sont réalisés dans un alliage d'aluminium et de bore.

6. Dispositif de rangement (1) selon l'une quelconque des revendications précédentes, **caractérisé en ce qu'**une fois assemblés, les éléments de paroi (6,8) du premier et du second jeux d'éléments de paroi sont démontables par coulissement des portions d'engagement (12) dans les portions d'engagement complémentaires (14).

7. Dispositif de rangement (1) selon l'une quelconque des revendications précédentes, **caractérisé en ce que** les éléments de paroi (10) situés à la périphérie du dispositif sont en acier inoxydable, et montés par vissage sur les éléments de paroi (6,8) des premier et second jeux d'éléments de paroi.

8. Dispositif de rangement (1) selon la revendication 7, **caractérisé en ce qu'**il comprend de plus une pièce d'extrémité perforée inférieure et une pièce d'extrémité perforée supérieure (20), lesdites pièces d'extrémité (20) étant en acier inoxydable et montées par vissage sur les éléments de paroi (10) situés à la périphérie dudit dispositif (1).

## Claims

1. A rack arrangement (1) adapted for storing and/or transporting radioactive substances, such as assemblies of nuclear fuel, said arrangement (1) comprising a plurality of housings (2), each adapted for receiving at least one nuclear fuel assembly, each housing (2) being made via a plurality of wall elements (6, 8, 10), which, when they are assembled, form the side wall of the housing (2), at least one connection between two wall elements (6, 8) of the housing (2) being achieved by means of an engagement portion (12) and of a complementary engagement portion (14) respectively provided on one and the other of said wall elements (6, 8) of the housing (2), said engagement portion (12) and said complementary engagement portion (14) each comprising a dovetail-shaped portion (12a, 14a) designed so as to engage into each other, along a direction substantially parallel to a longitudinal axis (4) of said housing (2), the side wall of at least one portion of said plurality of housings (2) being formed with wall elements (6) belonging to a first set of wall elements, and with wall elements (8) belonging to a second set of elements, the wall elements (8) of the second set being positioned substantially perpendicularly to the wall elements (6) of the first set,
the wall elements (6) of the first set, each comprising an engagement portion (12) protruding at least at one longitudinal edge of this wall element (6),
the wall elements (8) of the second set each comprising at least one face provided with at least one recessed complementary engagement portion (14), receiving an engagement portion (12),
at least one wall element (8) of the second set having two opposite faces on each of which a plurality of recessed complementary engagement portions (14) spaced apart from each other is provided,
and **characterized in that** said wall element (8) is assembled at each of its two opposite faces, to a plurality of wall elements (6), by means of its complementary engagement portions (14), and the wall elements (6) provided at one of the two faces are laid out in planes distinct from those in which are laid out the wall elements (6) provided at the other one of the two faces.

2. The rack arrangement (1) according to claim 1, **characterized in that** the engagement portion (12) and the complementary engagement portion (14) also each comprise a portion (12b, 14b) other than the dovetail-shaped portion (12a, 14a), the other portions (12b, 14b) being in contact with the dovetail-shaped portions (12a, 14a).

3. The rack arrangement (1) according to claim 1, **characterized in that** the engagement portion (12) and the complementary engagement portion (14) are only and respectively formed with the dovetail-shaped portions (12a, 14a).

4. The rack arrangement (1) according to any of the preceding claims, **characterized in that**, for each connection achieved by means of an engagement portion (12) and of a complementary engagement portion (14), the engagement portion (12) and the complementary engagement portion (14) cooperate with each other over the whole contact length between the wall elements (6, 8) provided with said portions (12, 14).

5. The rack arrangement (1) according to any of the preceding claims, **characterized in that** the wall elements (6, 8) of the first and second sets of wall elements are made in an alloy of aluminium and boron.

6. The rack arrangement (1) according to any of the preceding claims, **characterized in that**, once assembled, the wall elements (6, 8) of the first and second sets of wall elements may be disassembled by sliding the engagement portions (12) into the complementary engagement portions (14).

7. The rack arrangement (1) according to any of the preceding claims, **characterized in that** the wall elements (10) located at the periphery of the arrangement are in stainless steel, and mounted with screws on the wall elements (6, 8) of the first and second sets of wall elements.

8. The rack arrangement (1) according to claim 7, **characterized in that** it further comprises a lower perforated endpiece and an upper perforated endpiece (20), said endpieces (20) being in stainless steel and mounted with screws on the wall elements (10) located at the periphery of said arrangement (1).


**Patentansprüche**

1. Abstellvorrichtung (1), angepasst an die Lagerung und/oder den Transport von radioaktiven Stoffen, etwa Brennelementen, wobei die genannte Vorrichtung (1) eine Vielzahl von Sitzen (2) umfasst, jeder angepasst für die Aufnahme wenigstens eines Brennelements, wobei jeder Sitz (2) durch eine Vielzahl von Wandelementen (6, 8, 10) gebildet wird, die, wenn sie zusammengebaut sind, die Seitenwand bzw. Seitenwandung des Sitzes (2) bilden, wobei wenigstens eine Verbindung zwischen zwei Wandelementen (6, 8) des Sitzes (2) gebildet wird durch eine Schwalbenschwanzverbindung mit einem Zackenteil (12) und dem komplementären Zackenaufnahmeteil (14), von denen jeder einen schwalbenschwanzförmigen Abschnitt (12a, 14a) umfasst, konzipiert um in einer im Wesentlichen zu einer Längsachse (4) des genannten Sitzes (2) parallelen Richtung ineinander zu greifen, wobei die Seitenwand wenigstens eines Abschnitts der genannten Vielzahl von Sitzen (2) gebildet wird durch Wandelemente (6), die zu einem ersten Wandelemente-Satz gehören, und Wandelemente (8), die zu einem zweiten Wandelemente-Satz gehören, wobei die Wandelemente (8) des zweiten Satzes im Wesentlichen senkrecht zu den Wandelementen (6) des ersten Satzes angeordnet sind und jedes der Wandelemente (6) des ersten Satzes einen ab wenigstens einer Längskante dieses Wandelements (6) vorstehenden Eingriffsteil (12) umfasst, wobei jedes der Wandelemente (8) des zweiten Satzes wenigstens eine einen hohlen komplementären Eingriffsteil (14) zur Aufnahme eines Eingriffsteils (12) umfassende Seite aufweist, und wenigstens ein Wandelement (8) des zweiten Satzes zwei entgegengesetzte Seiten aufweist, von denen jede eine Vielzahl voneinander beabstandeter hohler komplementärer Eingriffsteile (14) aufweist, und

**dadurch gekennzeichnet, dass** das genannte Wandelemente (8) auf jeder seiner beiden entgegengesetzten Seiten mit Hilfe seiner komplementären Eingriffsteile (14) mit einer Vielzahl von Wandelementen (6) zusammengebaut wird, und dass die auf einer der beiden Seiten vorgesehenen Wandelemente (6) sich in anderen Ebenen befinden als die auf der anderen der beiden Seiten vorgesehenen Wandelemente (6).

2. Abstellvorrichtung (1) nach Anspruch 1, **dadurch gekennzeichnet, dass** der Eingriffsteil (12) und der komplementäre Eingriffsteil (14) jeweils auch einen anderen Teil (12b, 14b) als den schwalbenschwanzförmigen Teil (12a, 14a) umfassen, wobei die anderen Teile (12b, 14b) in Kontakt sind bzw. verbunden sind mit den schwalbenschwanzförmigen Teilen (12a, 14a).

3. Abstellvorrichtung (1) nach Anspruch 1, **dadurch gekennzeichnet, dass** der Eingriffsteil (12) und der komplementäre Eingriffsteil (14) nur und jeweils durch die schwalbenschwanzförmigen Teile (12a, 14a) gebildet werden.

4. Abstellvorrichtung (1) nach einem der vorhergehenden Ansprüche, **dadurch gekennzeichnet, dass** bei jeder mit Hilfe eines Eingriffsteils (12) und eines komplementären Eingriffsteils (14) realisierten Verbindung der Eingriffsteil (12) und der komplementäre Eingriffsteil (14) miteinander kooperieren über die gesamte Länge des Kontakts zwischen den mit den genannten Teilen (12, 14) ausgestatteten Wandelementen (6, 8).

5. Abstellvorrichtung (1) nach einem der vorhergehenden Ansprüche, **dadurch gekennzeichnet, dass** die Wandelemente (6, 8) des ersten oder zweiten Wandelemente-Satzes aus einer Aluminium- und Borlegierung hergestellt sind.

6. Abstellvorrichtung (1) nach einem der vorhergehenden Ansprüche, **dadurch gekennzeichnet, dass**, wenn zusammengebaut, die Wandelemente (6, 8) des ersten und zweiten Wandelemente-Satzes wieder auseinanderbaubar sind durch Verschiebung der Eingriffsteile (12) in den komplementären Eingriffsteilen (14).

7. Abstellvorrichtung (1) nach einem der vorhergehenden Ansprüche, **dadurch gekennzeichnet, dass** die an der Peripherie der Vorrichtung befindlichen Wandelemente (10) aus nichtoxidierendem Stahl sind und auf die Wandelemente (6, 8) des ersten und zweiten Wandelemente-Satzes geschraubt sind.

8. Abstellvorrichtung (1) nach Anspruch 7, **dadurch gekennzeichnet, dass** sie zudem ein perforiertes unteres Endstück und ein perforiertes oberes Endstück (20) umfasst, wobei die genannten Endstücke (20) aus nichtoxidierendem Stahl sind und auf die Wandelemente (10) geschraubt sind, die sich an der Peripherie der genannten Vorrichtung (1) befinden.

# Fig. 1

**Fig. 2**

**Fig. 3a**

**Fig. 3b**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001166089 A
- EP 1246204 A
- EP 0042882 A
- WO 0072325 A
- GB 117186 A
- US 3611645 A